# EUROPÄISCHE PATENTSCHRIFT

(11) **EP 3 596 770 B1**
(45) Veröffentlichungstag und Bekanntmachung des Hinweises auf die Patenterteilung: **07.04.2021**
(21) Anmeldenummer: 18706235.1
(22) Anmeldetag: 14.02.2018
(51) Int. Cl.: H01M 8/04089, H01M 8/04082, H01M 8/0438, H01M 8/04537, H01M 8/04664, H01M 8/1018, H01M 8/04223

(54) **VERFAHREN ZUR ERKENNUNG EINER LECKAGE IN EINEM ENERGIEWANDLER-SYSTEM**
METHOD FOR DETECTING A LEAK IN AN ENERGY CONVERTER SYSTEM
PROCÉDÉ DE DÉTECTION D'UNE FUITE DANS UN SYSTÈME DE CONVERSION D'ÉNERGIE

(30) Priorität: 14.03.2017 DE 102017204202
(43) Veröffentlichungstag der Anmeldung: 22.01.2020
(73) Patentinhaber: Robert Bosch GmbH, 70442 Stuttgart (DE)
(72) Erfinder: KEMMER, Helerson, 71665 Vaihingen (DE); SCHILD, Johannes, 74232 Abstatt (DE)
(86) Internationale Anmeldenummer: PCT/EP2018/053654
(87) Internationale Veröffentlichungsnummer: WO 2018/166734

(56) Entgegenhaltungen:
- WO-A2-2007/069010
- JP-A- 2005 257 340

## Beschreibung

Die Erfindung betrifft ein Verfahren zur Erkennung einer Leckage in einem Energiewandler-System enthaltend ein Gas, wobei ein Druckregler zur Regelung eines Gasdrucks in dem Energiewandler-System eingesetzt wird und der Druckregler ein Gasdosierventil aufweist.

### Stand der Technik

Insbesondere bei Energiewandler-Systemen wie Brennstoffzellen, die einen Gefahrstoff wie Wasserstoff enthalten, ist die Dichtigkeit des Energiewandler-Systems von großer Bedeutung.

Eine Brennstoffzelle ist eine galvanische Zelle, welche die chemische Reaktionsenergie eines kontinuierlich zugeführten Brennstoffes und eines Oxidationsmittels in elektrische Energie wandelt. Eine Brennstoffzelle ist also ein elektrochemischer Energiewandler. Bei bekannten Brennstoffzellen werden insbesondere Wasserstoff (H₂) und Sauerstoff (O₂) in Wasser (H₂O), elektrische Energie und Wärme gewandelt.

Ein Elektrolyseur ist ein elektrochemischer Energiewandler, welcher Wasser (H₂O) mittels elektrischer Energie in Wasserstoff (H₂) und Sauerstoff (O₂) spaltet.

Unter anderem sind Protonen-Austausch-Membran (Proton-Exchange-Membran = PEM) -Brennstoffzellen bekannt. Protonenaustauschmembran-Brennstoffzellen weisen eine zentral angeordnete Membran auf, die für Protonen, also für Wasserstoffionen, durchlässig ist. Das Oxidationsmittel, insbesondere Luftsauerstoff, ist dadurch räumlich von dem Brennstoff, insbesondere Wasserstoff, getrennt.

Protonenaustauschmembran-Brennstoffzellen weisen ferner eine Anode und eine Kathode auf. Der Brennstoff wird an der Anode der Brennstoffzelle zugeführt und katalytisch unter Abgabe von Elektronen zu Protonen oxidiert. Die Protonen gelangen durch die Membran zu der Kathode. Die abgegebenen Elektronen werden aus der Brennstoffzelle abgeleitet und fließen über einen externen Stromkreis zu der Kathode.

Das Oxidationsmittel wird an der Kathode der Brennstoffzelle zugeführt und es reagiert durch Aufnahme der Elektronen aus dem externen Stromkreis und Protonen, die durch die Membran zur Kathode gelangt sind, zu Wasser. Das so entstandene Wasser wird aus der Brennstoffzelle abgeleitet. Die Bruttoreaktion lautet:

O₂ + 4H⁺ + 4e⁻ → 2H₂O

Zwischen der Anode und der Kathode der Brennstoffzelle liegt dabei eine Spannung an. Zur Erhöhung der Spannung können mehrere Brennstoffzellen mechanisch hintereinander zu einem Brennstoffzellenstapel angeordnet und elektrisch verbunden werden. Ein Brennstoffzellenstapel wird auch als Stack bezeichnet.

In Energiewandler-Systemen, die Gas enthalten, werden häufig mechanische, passive Druckminderer und Druckregler eingesetzt, zunehmend auch Gasdosierventile, die mittels Pulsweitenmodulation gesteuert werden.

Energiewandler-Systeme können eine Steuereinheit umfassen, die einen Druckregler aufweist. Druckregler besitzen üblicherweise eingangsseitig einen Eingangsdruck und sekundärseitig einen Ausgangsdruck. Mittels einer Steuerung der Steuereinheit wird im Allgemeinen der Ausgangsdruck des Druckreglers, der bei der Verwendung des Druckreglers in Brennstoffzellen bevorzugt einem Anodendruck entspricht, gemessen und auf einen Sollwert eingestellt.

Der Ausgangsdruck des Druckreglers auf der Sekundärseite nimmt ohne eine weitere Dosierung von Gas aufgrund von Gassenken ab. Die Gassenken können unterschiedlicher Natur sein und sind insbesondere durch einen Gasverbrauch, wie einen Verbrauch von Wasserstoff in einer Brennstoffzelle durch Transfer des Wasserstoffs durch die Protonen-Austausch-Membran (PEM) zur Kathode, durch Spülen mittels eines Purgeventils oder eines Drainventils oder auch durch Undichtigkeiten des Energiewandler-Systems bedingt. Gasabflüsse durch die Purgeventile oder Drainventile sind aus bekannten Eigenschaften der verwendeten Ventile ermittelbar. Der Gasverbrauch ist beispielsweise in einer Brennstoffzelle durch Messung des erzeugten Stromes direkt ermittelbar. Nicht zufriedenstellend ermittelbar sind häufig die Undichtigkeiten des Energiewandler-Systems.

Üblicherweise werden Undichtigkeiten in Energiewandler-Systemen beispielsweise durch zyklische Druckhaltetests oder durch externe Gassensoren, in Brennstoffzellen inbesondere durch Wasserstoffsensoren außerhalb, insbesondere oberhalb der Brennstoffzelle, ermittelt.

Die DE 10 2006 023 433 A1 beschreibt einen Druckregler, der mehrere Ventilstufen umfasst um das Reduzierungsverhältnis des Reglers zu erhöhen und eine besondere Anwendung für eine Anodeneingangsseite eines Brennstoffzellensystems besitzt. Eine Druckregelung erfolgt mittels eines Durchflusssteuerdruckreglers, wobei eine Membrananordnung mit Doppelmembran vorgesehen ist. Wenn eine erste Membran Wasserstoff durchlässt, kann das Leck detektiert werden, bevor der Wasserstoff die zweite Membran und die Luftseite des Druckreglers erreicht.

Die DE 102 31 208 A1 beschreibt ein Verfahren und eine Vorrichtung zur Untersuchung eines Brennstoffzellensystems. Das Verfahren bzw. die Vorrichtung sind ausgelegt um zu prüfen, ob das Brennstoffzellensystem auf der Anodenseite und/oder Kathodenseite gasdicht ist und/oder ob eine Leckage zwischen der Anodenseite und der Kathodenseite des Brennstoffzellensystems gegeben ist. Eine Prüfmischung wird der Anodenseite des Brennstoffzellensystems zugeführt und es wird bei geschlossenem Ventil beobachtet, ob der eingefüllte Prüfdruck mit der Zeit unzulässig nachlässt. Dies wird beispielsweise mit einem Drucksensor ausgeführt, der an eine externe Steuerung angeschlossen sein kann. Weiterhin kann eine Durchflussmesseinrichtung zur Leckageprüfung genutzt werden, wobei das Brennstoffzellensystem bis zu einem bestimmten Prüfdruck aufgefüllt und dann mit der Durchflussmesseinrichtung gemessen wird, ob Prüfgas nachströmt um den Prüfdruck auf dem eingestellten Niveau zu halten.

Die WO 2007/069010 A2 gibt ein Verfahren zur Erkennung einer Leckage in einem Brennstoffzellensystem an, bei welchem die durch einen Druckregler zur Verfügung gestellte Gasmenge mit dem Druck korreliert wird. Zudem wird eine Menge an Wasserstoff, die in der Brennstoffzelle verbraucht wird, basierend auf dem gemessenen Strom berechnet.

Nachteilig an den Verfahren des Standes der Technik ist, dass separate Drucktest außerhalb des gewünschten Betriebes durchgeführt werden müssen bzw. dass zusätzliche Gassensoren nötig sind.

### Offenbarung der Erfindung

Es wird ein Verfahren zur Erkennung einer Leckage in einem Energiewandler-System enthaltend ein Gas bereitgestellt, wobei ein Druckregler zur Regelung eines Gasdrucks in dem Energiewandler-System eingesetzt wird, der Druckregler ein Gasdosierventil aufweist und das Verfahren folgende Schritte umfasst:
a. Messen eines Eingangsdrucks des Druckreglers und Messen eines Ausgangsdrucks des Druckreglers,
b. Messen einer Ausgabegröße des Energiewandler-Systems und Berechnung eines Gasbedarfs in dem Energiewandler-System ausgehend von der Ausgabegröße des Energiewandler-Systems,
c. Bestimmen eines ersten berechneten Durchflusses durch den Druckregler ausgehend von dem gemessenen Eingangsdruck des Druckreglers und dem gemessenen Ausgangsdruck des Druckreglers,
d. Bestimmen eines zweiten berechneten Durchflusses durch den Druckregler ausgehend von dem Gasbedarf,
e. Vergleichen des ersten berechneten Durchflusses mit dem zweiten berechneten Durchfluss durch Bilden eines ersten Vergleichswertes aus dem ersten berechneten Durchfluss und dem zweiten berechneten Durchfluss,
f. Bestimmen eines ersten Grenzwertes und Erzeugen eines Fehlersignals, wenn der Betrag des ersten Vergleichswertes größer ist als der erste Grenzwert.

Bevorzugt umfasst das Energiewandler-System mindestens eine Brennstoffzelle, die eine Anode und eine Kathode umfasst. Mehr als eine Brennstoffzelle sind bevorzugt als Brennstoffzellen-Stack angeordnet. Weiterhin bevorzugt enthält das Gas Wasserstoff. Mehr bevorzugt besteht das Gas zu mehr als 40 Gew.-% aus Wasserstoff, besonders bevorzugt zu mehr als 90 Gew.-% und insbesondere bevorzugt zu mehr als 95 Gew.-%.

Bevorzugt stellt die Ausgabegröße einen von dem Energiewandler-System erzeugten elektrischen Strom dar. Insbesondere in Brennstoffzellen ist der erzeugte Strom direkt vom Gasverbrauch abhängig, so dass der Gasverbrauch ausgehend von dem abnehmbaren Strom ermittelt werden kann.

Bevorzugt entspricht der Ausgangsdruck des Druckreglers dem Anodendruck der Brennstoffzelle, besonders bevorzugt ist der Ausgangsdruck des Druckreglers gleich dem Anodendruck der Brennstoffzelle.

Bevorzugt umfasst das Gasdosierventil einen Injektor. Der Eingangsdruck des Druckreglers beträgt bevorzugt von 5 bar bis 30 bar, mehr bevorzugt von 10 bar bis 20 bar.

Das Druckventil wird vorteilhaft mittels Pulsweitenmodulation gesteuert. Die Pulsweitenmodulation weist bevorzugt eine Taktung auf und die Bestimmung des ersten berechneten Durchflusses durch den Druckregler in dem Schritt c) wird ausgehend von dem gemessenen Eingangsdruck des Druckreglers, dem gemessenen Ausgangsdruck des Druckreglers und der Taktung ausgeführt.

Bevorzugt umfasst der Gasbedarf in Schritt b) einen Gasverbrauch, der ausgehend von der Ausgabegröße des Energiewandler-Systems berechnet wird, und einen Purgestrom. Das Energiewandler-System kann ein Purgeventil umfassen, durch das, wenn dieses geöffnet ist, Gas in die Umgebung entweichen kann. Das beabsichtigt entweichende Gas, das als Purgestrom bezeichnet wird, kann bei der Bestimmung des Gasbedarfs in dem Energiewandler-System berücksichtigt werden um ein fehlerhaftes Erzeugen des Fehlersignals aufgrund des Purgestroms zu vermeiden. Hierzu kann der Purgestrom als Korrekturterm in die Berechnung des Gasbedarfs in dem Energiewandler-System einbezogen werden.

Alternativ zur Berücksichtigung des Purgestroms bei der Berechnung des Gasbedarfs kann die Ausführung des Verfahrens zur Erkennung einer Leckage unterbrochen werden, solange ein Purgeventil geöffnet ist. Bevorzugt kann eine Unterbrechung der Ausführung des Verfahrens zur Erkennung einer Leckage auf eine maximale Dauer beschränkt sein. Beispielsweise kann die Unterbrechung des Verfahrens zur Erkennung der Leckage auf 10 Sekunden als kontinuierliches Zeitintervall und/oder auf die Summe von 20 Sekunden pro Minute beschränkt werden.

Der Druckregler besitzt eine Kennlinie, welche die gegenseitige Abhängigkeit physikalischer Größen des Druckreglers beschreibt. So kann der Durchfluss durch den Druckregler als Funktion des Eingangsdrucks, des Ausgangsdrucks und gegebenenfalls der Taktung der Pulsweitenmodulation dargestellt werden. Durch eine genaue Fertigung des Druckreglers und Kenntnis des eingesetzten Druckreglers ist dem Fachmann die Kennlinie des Druckreglers bekannt. Die Genauigkeit der Kennlinie, also die theoretische Beschreibung des Durchflusses, die die Funktion des Druckreglers modelliert, kann durch Vermessung des zu verwendenden Druckreglers angepasst und optimiert werden und damit auch die Bestimmung des ersten berechneten Durchflusses. Die Optimierung erfolgt bevorzugt durch Einbringen weiterer Parameter in das theoretische Modell.

Bevorzugt erfolgt die Regelung des Ausgabedrucks des Druckreglers mittels einer close-loop -Regelung zunächst unabhängig von der Kennlinie, also unabhängig vom aktuellen Eingangsdruck, Ausgangsdruck und gegebenenfalls Taktung.

Zur Bestimmung des ersten berechneten Durchflusses wird die Kennlinie und damit ein erwarteter Durchfluss durch den Druckregler als Funktion des Eingangsdruckes, des Ausgangsdruckes und gegebenenfalls der Taktung der Pulsweitenmodulation modelliert. Bevorzugt gehen Ansteuerwerte der Pulsweitenmodulation in die Kennlinie zur Bestimmung des ersten berechneten Durchflusses ein.

Der Eingangsdruck und/oder der Ausgangsdruck des Druckreglers werden bevorzugt durch redundante oder überwachte Sensorik gemessen.

Weiterhin wird der aktuelle Betriebszustand des Energiewandler-Systems ermittelt. Hierzu wird der zweite berechnete Durchfluss durch den Druckregler bestimmt, wozu vorteilhaft mögliche Gassenken addiert werden. Der Gasbedarf, also die Summe der Gassenken im Energiewandler-System, setzt sich bevorzugt aus dem Gasverbrauch und dem Purgestrom zusammen. Bevorzugt wird der Status des Purgeventils, der auch als Stellung des Purgeventils bezeichnet werden kann, erfasst, so dass diese Information in die Bestimmung des zweiten berechneten Durchflusses in dem Schritt d) eingehen kann. Der Purgestrom kann aus der Stellung des Purgeventils, die im Energiewandler-System, insbesondere der Steuereinheit bekannt ist, sowie den Eigenschaften des Purgeventils, insbesondere den Flussraten des Purgeventils, ermittelt werden. Der Gasverbrauch wird bevorzugt aus der Ausgabegröße des Energiewandler-Systems, insbesondere aus dem abgegebenen Strom der Brennstoffzelle errechnet.

Der erste berechnete Durchfluss, ermittelt aus der Modellierung basierend auf dem Eingangsdruck, dem Ausgangsdruck und gegebenenfalls der Taktung wird mit dem zweiten berechneten Durchfluss, der den aktuellen Betriebszustand des Energiewandler-Systems beschreibt, verglichen. Bei einer Abweichung dieser Durchflusswerte voneinander, die den definierten ersten Grenzwert übersteigt, wird ein Fehlersignal erzeugt. Das Fehlersignal löst bevorzugt eine Ausgabe einer Warnung oder eine Änderung der Betriebsweise des Energiewandler-Systems, insbesondere eine Abschaltung der Gaszufuhr, aus.

Der erste Grenzwert ist vorteilhaft eine Funktion von dem Anodendruck, einem Kathodendruck und/oder von weiteren spezifischen Parametern des Energiewandler-Systems wie dem Alter des Energiewandler-Systems, der Gastemperatur oder einer Einstellung einer externen Lüftung, die vorteilhaft von dem Energiewandler-System umfasst ist. Alternativ kann als erster Grenzwert ein fester Wert gewählt werden.

Vorteilhaft wird der erste Vergleichswert gebildet, indem die Differenz zwischen dem ersten berechneten Durchfluss und dem zweiten berechneten Durchfluss gebildet wird. Bei der Bildung des ersten Vergleichswertes kann der Absolutwert des Eingangsdrucks und/oder der Absolutwert des Ausgangsdrucks, bevorzugt der Absolutwert des Ausgangsdrucks, berücksichtigt werden.

Bevorzugt wird ein zweiter Grenzwert bestimmt, der erste Vergleichswert über ein Zeitintervall erfasst und aus dem über das Zeitintervall, das beispielsweise 1 Sekunde betragen kann, erfassten ersten Vergleichswert ein zweiter Vergleichswert gebildet. Weiterhin wird das Erzeugen des Fehlersignals in Schritt f) bevorzugt nur durchgeführt, wenn der Betrag des zweiten Vergleichswerts größer als der zweite Grenzwert ist.

Der zweite Vergleichswert kann beispielsweise durch Bildung des Integrals einer Funktion des ersten Vergleichswerts über die Zeit gebildet werden. Das Vorgehen kann auch als Durchführung einer Integralentprellung bezeichnet werden.

Durch den Abgleich mit dem zweiten Grenzwert kann eine kurzzeitige Abweichung des Systems bei dynamischen Vorgängen ausgeglichen werden und ein fehlerhaftes Erzeugen des Fehlersignals vermieden werden. Als fehlerhaft wird ein unzutreffendes Fehlersignal bei tatsächlicher Dichtigkeit des Energiewandler-Systems betrachtet.

### Vorteile der Erfindung

Das erfindungsgemäße Verfahren gestattet eine Erkennung und Quantifizierung einer Leckage in einem Energiewandler-System, insbesondere einer Undichtigkeit einer Anode in einem Brennstoffzellensystem, im laufenden Betrieb. Hierzu werden zwei vergleichbare Größen für den Durchfluss durch den Druckregler ermittelt ohne dass ein separater Durchflussmesser benötigt wird. Darüber hinaus kann auf eine externe Sensorik zur Bestimmung des Gases, insbesondere zum Nachweis von Wasserstoff außerhalb des Brennstoffzellensystems verzichtet werden. Eine genauere Diagnose der Leckage sowie ein wartungsärmeres System sind möglich.

### Kurze Beschreibung der Zeichnungen

Ausführungsformen der Erfindung werden anhand der Zeichnung und der nachfolgenden Beschreibung näher erläutert.

Es zeigen:
- Figur 1: Fließschema eines Energiewandler-Systems und eines Druckreglers und
- Figur 2: eine schematische Darstellung eines Ablaufs eines erfindungsgemäßen Verfahrens.

### Ausführungsformen der Erfindung

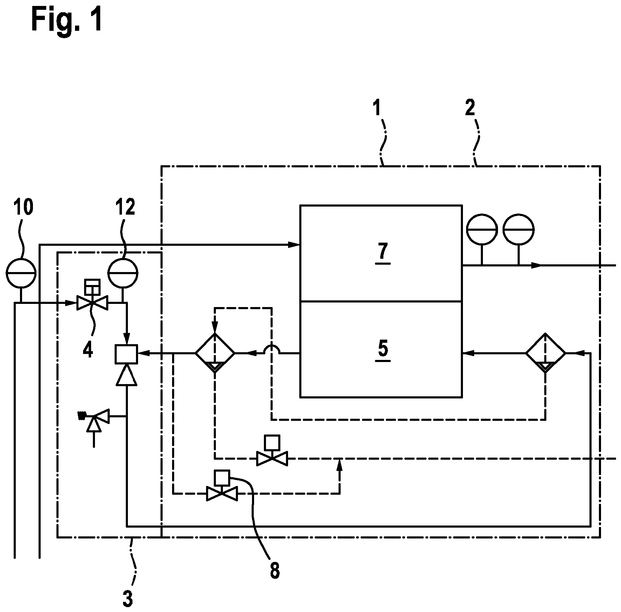

Figur 1 zeigt ein Energiewandler-System 1 mit einem Brennstoffzellensystem 2, das eine Anode 5 und eine Kathode 7 umfasst. Die Anode 5 enthält ein Gas, insbesondere Wasserstoff, dessen Druck durch einen Druckregler 3, der ein Gasdosierventil 4 umfasst, geregelt wird. Vor der Anode 5 wird ein Ausgangsdruck 12 des Druckreglers 3 gemessen. Ferner umfasst das Energiewandler-System 1 ein Purgeventil 8.

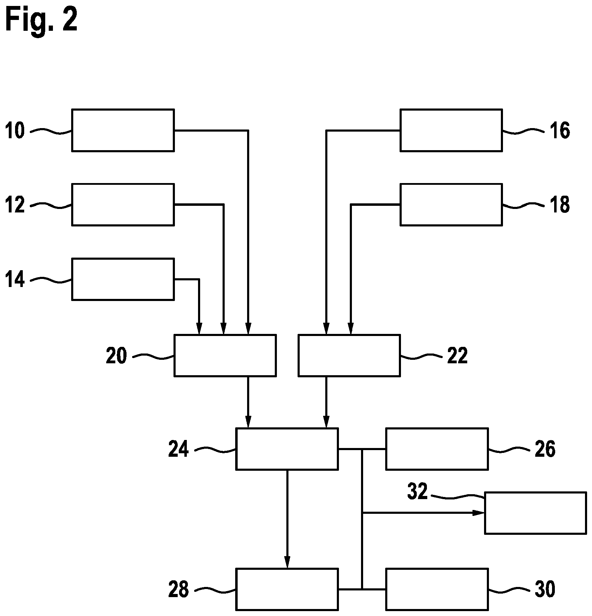

Figur 2 zeigt schematisch den Ablauf eines erfindungsgemäßen Verfahrens. Zunächst werden ein Eingangsdruck 10 und ein Ausgangsdruck 12 des Druckreglers 3 gemessen, ferner ist eine Taktung 14 einer Pulsweitenmodulation des Gasdosierventils 4 des Druckreglers 3 bekannt. Aus dem Eingangsdruck 10, dem Ausgangsdruck 12 und gegebenenfalls der Taktung 14 wird mittels einer Kennlinie des Druckreglers 3 als theoretisches Modell ein erster berechneter Durchfluss 20 bestimmt.

Weiterhin wird, bevorzugt für jeden Zeitpunkt, für den der erste berechnete Durchfluss 20 bestimmt wird, eine Ausgabegröße 16 des Energiewandler-Systems 1 gemessen, insbesondere wird als Ausgabegröße 16 ein erzeugter Strom des Brennstoffzellensystems 2 gemessen.

Gegebenenfalls wird ein Purgestrom 18 ermittelt, der aus den Eigenschaften und dem Status des Purgeventils 8 bekannt ist.

Aus der Ausgabegröße 16 und gegebenenfalls dem Purgestrom 18 wird eine zweiter berechneter Durchfluss 22 bestimmt, der mit dem ersten berechneten Durchfluss 20 durch Bilden eines ersten Vergleichswerts 24, der zum Beispiel die Differenz zwischen dem ersten berechneten Durchfluss 20 und dem zweiten berechneten Durchfluss 22 darstellt, verglichen wird. Der erste Vergleichswert 24 wird weiterhin mit einem ersten Grenzwert 26 verglichen, der fix sein kann oder abhängig sein kann von dem Ausgangsdruck 12, insbesondere von einem Anodendruck, einem Kathodendruck oder weiteren spezifischen Parametern des Energiewandler-Systems 1.

Ist der Betrag des ersten Vergleichswertes 24 größer als der erste Grenzwert 26, so wird ein Fehlersignal 32 erzeugt. Das Erzeugen des Fehlersignals 32 kann gegebenenfalls dadurch unterbunden werden, dass der erste Vergleichswert 24 über ein Zeitintervall erfasst wird und ein zweiter Vergleichswert 28 gebildet wird, der mit einem zweiten Grenzwert 30 verglichen wird. Sollte der zweite Vergleichswert 28 kleiner als der zweite Grenzwert 30 sein, so wird kein Fehlersignal 32 erzeugt.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Erkennung einer Leckage in einem Energiewandler-System (1) enthaltend ein Gas, wobei ein Druckregler (3) zur Regelung eines Gasdrucks in dem Energiewandler-System (1) eingesetzt wird, der Druckregler (3) ein Gasdosierventil (4) aufweist und das Verfahren folgende Schritte umfasst:
a. Messen eines Eingangsdrucks (10) des Druckreglers (3) und Messen eines Ausgangsdrucks (12) des Druckreglers (3),
b. Messen einer Ausgabegröße (16) des Energiewandler-Systems (1) und Berechnung eines Gasbedarfs in dem Energiewandler-System (1) ausgehend von der Ausgabegröße (16) des Energiewandler-Systems (1),
c. Bestimmen eines ersten berechneten Durchflusses (20) durch den Druckregler (3) ausgehend von dem gemessenen Eingangsdruck (10) des Druckreglers (3) und dem gemessenen Ausgangsdruck (12) des Druckreglers (3),
d. Bestimmen eines zweiten berechneten Durchflusses (22) durch den Druckregler (3) ausgehend von dem Gasbedarf,
e. Vergleichen des ersten berechneten Durchflusses (20) mit dem zweiten berechneten Durchfluss (22) durch Bilden eines ersten Vergleichswertes (24) aus dem ersten berechneten Durchfluss (20) und dem zweiten berechneten Durchfluss (22),
f. Bestimmen eines ersten Grenzwertes (26) und Erzeugen eines Fehlersignals (32), wenn der Betrag des ersten Vergleichswertes (24) größer ist als der erste Grenzwert (26).

2. Verfahren nach Anspruch 1, **dadurch gekennzeichnet, dass** das Energiewandler-System (1) mindestens eine Brennstoffzelle umfasst, die eine Anode (5) und eine Kathode (7) umfasst, und das Gas Wasserstoff enthält.

3. Verfahren nach einem der vorstehenden Ansprüche, **dadurch gekennzeichnet, dass** die Ausgabegröße (16) einen von dem Energiewandler-System (1) erzeugten elektrischen Strom darstellt.

4. Verfahren nach Anspruch 2 oder 3, **dadurch gekennzeichnet, dass** der Ausgangsdrucks (12) des Druckreglers (3) einem Anodendruck der Brennstoffzelle entspricht.

5. Verfahren nach einem der vorstehenden Ansprüche, **dadurch gekennzeichnet, dass** der Eingangsdruck (10) des Druckreglers (3) von 5 bar bis 30 bar beträgt.

6. Verfahren nach einem der vorstehenden Ansprüche, **dadurch gekennzeichnet, dass** das Gasdosierventil (4) mittels Pulsweitenmodulation gesteuert wird, die Pulsweitenmodulation eine Taktung (14) aufweist und die Bestimmung des ersten berechneten Durchflusses (20) durch den Druckregler (3) in dem Schritt c) ausgehend von dem gemessenen Eingangsdruck (10) des Druckreglers (3), dem gemessenen Ausgangsdruck (12) des Druckreglers (3) und der Taktung (14) ausgeführt wird.

7. Verfahren nach einem der vorstehenden Ansprüche, **dadurch gekennzeichnet, dass** der Gasbedarf in dem Schritt b) einen Gasverbrauch, der ausgehend von der Ausgabegröße (16) des Energiewandler-Systems (1) berechnet wird, und einen Purgestrom (18) umfasst.

8. Verfahren nach einem der Ansprüche 2 bis 7, **dadurch gekennzeichnet, dass** der erste Grenzwert (26) eine Funktion von dem Anodendruck, einem Kathodendruck und/oder modellspezifischen Parametern der Brennstoffzelle ist.

9. Verfahren nach einem der vorstehenden Ansprüche, **dadurch gekennzeichnet, dass** der erste Vergleichswert (24) die Differenz zwischen dem ersten berechneten Durchfluss (20) und dem zweiten berechneten Durchfluss (22) ist.

10. Verfahren nach einem der vorstehenden Ansprüche, **dadurch gekennzeichnet, dass** ein zweiter Grenzwert (30) bestimmt wird, der erste Vergleichswert (24) über ein Zeitintervall erfasst wird und aus dem über das Zeitintervall erfassten ersten Vergleichswert (24) ein zweiter Vergleichswert (28) gebildet wird und das Erzeugen des Fehlersignals (32) in dem Schritt f) nur ausgeführt wird, wenn der Betrag des zweiten Vergleichswerts (28) größer als der zweite Grenzwert (30) ist.

## Claims

1. Method for detecting a leak in an energy converter system (1) containing a gas, wherein a pressure regulator (3) is used for closed-loop control of a gas pressure in the energy converter system (1), the pressure regulator (3) comprises a gas metering valve (4) and the method comprises the following steps:
a. measuring an input pressure (10) of the pressure regulator (3) and measuring an output pressure (12) of the pressure regulator (3),
b. measuring an output variable (16) of the energy converter system (1) and calculating a gas requirement in the energy converter system (1) on the basis of the output variable (16) of the energy converter system (1),
c. determining a first calculated flow (20) through the pressure regulator (3) on the basis of the measured input pressure (10) of the pressure regulator (3) and the measured output pressure (12) of the pressure regulator (3),
d. determining a second calculated flow (22) through the pressure regulator (3) on the basis of the gas requirement,
e. comparing the first calculated flow (20) with the second calculated flow (22) by forming a first comparison value (24) from the first calculated flow (20) and the second calculated flow (22),
f. determining a first threshold (26) and producing a fault signal (32) if the magnitude of the first comparison value (24) is greater than the first threshold (26).

2. Method according to Claim 1, **characterized in that** the energy converter system (1) comprises at least one fuel cell comprising an anode (5) and a cathode (7), and the gas contains hydrogen.

3. Method according to either one of the preceding claims, **characterized in that** the output variable (16) represents an electric current produced by the energy converter system (1).

4. Method according to Claim 2 or 3, **characterized in that** the output pressure (12) of the pressure regulator (3) corresponds to an anode pressure of the fuel cell.

5. Method according to any one of the preceding claims, **characterized in that** the input pressure (10) of the pressure regulator (3) is between 5 bar and 30 bar.

6. Method according to any one of the preceding claims, **characterized in that** the gas metering valve (4) is controlled by means of pulse width modulation, the pulse width modulation has a clock (14) and the first calculated flow (20) through the pressure regulator (3) in step c) is determined on the basis of the measured input pressure (10) of the pressure regulator (3), the measured output pressure (12) of the pressure regulator (3) and the clock (14).

7. Method according to any one of the preceding claims, **characterized in that** the gas requirement in step b) comprises a gas consumption, calculated on the basis of the output variable (16) of the energy converter system (1), and a purge flow (18).

8. Method according to any one of Claims 2 to 7, **characterized in that** the first threshold (26) is a function of the anode pressure, a cathode pressure and/or model-specific parameters of the fuel cell.

9. Method according to any one of the preceding claims, **characterized in that** the first comparison value (24) is the difference between the first calculated flow (20) and the second calculated flow (22) .

10. Method according to any one of the preceding claims, **characterized in that** a second threshold (30) is determined, the first comparison value (24) is captured over a time interval and a second comparison value (28) is formed from the first comparison value (24) that was captured over the time interval and the fault signal (32) is only produced in step f) if the magnitude of the second comparison value (28) is greater than the second threshold (30).

## Revendications

1. Procédé de détection d'une fuite dans un système de conversion d'énergie (1) contenant un gaz,
dans lequel un régulateur de pression (3) est mis en œuvre pour réguler une pression de gaz dans le système de conversion d'énergie (1), le régulateur de pression (3) présente une vanne de dosage de gaz (4), et le procédé comprend les étapes suivantes consistant à :
a. mesurer une pression d'entrée (10) du régulateur de pression (3), et mesurer une pression de sortie (12) du régulateur de pression (3),
b. mesurer une grandeur de sortie (16) du système de conversion d'énergie (1), et calculer une demande de gaz dans le système de conversion d'énergie (1) en partant de la grandeur de sortie (16) du système de conversion d'énergie (1),
c. déterminer un premier débit calculé (20) par le régulateur de pression (3) en partant de la pression d'entrée mesurée (10) du régulateur de pression (3) et de la pression de sortie mesurée (12) du régulateur de pression (3),
d. déterminer un deuxième débit calculé (22) par le régulateur de pression (3) en partant de la demande de gaz,
e. comparer le premier débit calculé (20) au deuxième débit calculé (22) en formant une première valeur de comparaison (24) à partir du premier débit calculé (20) et du deuxième débit calculé (22),
f. déterminer une première valeur limite (26), et générer un signal d'erreur (32) si le montant de la première valeur de comparaison (24) est supérieur à la première valeur limite (26).

2. Procédé selon la revendication 1, **caractérisé en ce que** le système de conversion d'énergie (1) comprend au moins une pile à combustible qui comprend une anode (5) et une cathode (7), et **en ce que** le gaz contient de l'hydrogène.

3. Procédé selon l'une quelconque des revendications précédentes, **caractérisé en ce que** la grandeur de sortie (16) est un courant électrique généré par le système de conversion d'énergie (1).

4. Procédé selon la revendication 2 ou 3, **caractérisé en ce que** la pression de sortie (12) du régulateur de pression (3) est une pression anodique de la pile à combustible.

5. Procédé selon l'une quelconque des revendications précédentes, **caractérisé en ce que** la pression d'entrée (10) du régulateur de pression (3) mesure de 5 bar à 30 bar.

6. Procédé selon l'une quelconque des revendications précédentes, **caractérisé en ce que** la vanne de dosage de gaz (4) est commandée au moyen d'une modulation d'impulsions en largeur, la modulation d'impulsions en largeur présente une synchronisation (14), et la détermination du premier débit calculé (20) est effectuée par le régulateur de pression (3) à l'étape c) en partant de la pression d'entrée mesurée (10) du régulateur de pression (3), de la pression de sortie mesurée (12) du régulateur de pression (3) et de la synchronisation (14).

7. Procédé selon l'une quelconque des revendications précédentes, **caractérisé en ce que** la demande de gaz à l'étape b) comprend une consommation de gaz, qui est calculée en partant de la grandeur de sortie (16) du système de conversion d'énergie (1), et un courant de purge (18).

8. Procédé selon l'une quelconque des revendications 2 à 7, **caractérisé en ce que** la première valeur limite (26) est une fonction de la pression anodique, d'une pression cathodique et/ou de paramètres spécifiques au modèle de la pile à combustible.

9. Procédé selon l'une quelconque des revendications précédentes, **caractérisé en ce que** la première valeur de comparaison (24) est la différence entre le premier débit calculé (20) et le deuxième débit calculé (22).

10. Procédé selon l'une quelconque des revendications précédentes, **caractérisé en ce qu'**une deuxième valeur limite (30) est déterminée, la première valeur de comparaison (24) est détectée durant un intervalle de temps, et à partir de la première valeur de comparaison (24) détectée durant l'intervalle de temps, une deuxième valeur de comparaison (28) est formée, et la génération du signal d'erreur (32) à l'étape f) n'est effectuée que si le montant de la deuxième valeur de comparaison (28) est supérieur à la deuxième valeur limite (30).
